# EUROPÄISCHE PATENTSCHRIFT

(11) **EP 2 497 142 B1**
(45) Veröffentlichungstag und Bekanntmachung des Hinweises auf die Patenterteilung: **31.07.2013**
(21) Anmeldenummer: 10781598.7
(22) Anmeldetag: 27.10.2010
(51) Int. Cl.: H01M 8/06, H01M 8/24

(54) **BRENNSTOFFZELLENANORDNUNG IN EINEM GEHÄUSE**
FUEL CELL ARRANGEMENT WITHIN ENCLOSURE
DISPOSITIF DE PILE À COMBUSTIBLE DANS UNE BOÎTE

(30) Priorität: 02.11.2009 DE 102009052863
(43) Veröffentlichungstag der Anmeldung: 12.09.2012
(73) Patentinhaber: Baxi Innotech GmbH, 20539 Hamburg (DE)
(72) Erfinder: KLOSE, Philipp, 22769 Hamburg (DE); FRANKE, Alexander, 20359 Hamburg (DE); SIMON, Rolf, 22769 Hamburg (DE)
(74) Vertreter: Hauck Patent- und Rechtsanwälte
(86) Internationale Anmeldenummer: PCT/EP2010/006556
(87) Internationale Veröffentlichungsnummer: WO 2011/050949

(56) Entgegenhaltungen:
- EP-A2- 1 397 843
- WO-A1-2009/122766
- DE-A1- 19 548 297
- US-A- 5 856 034

## Beschreibung

Die Erfindung betrifft eine Brennstoffzellenanordnung, umfassend ein Hauptgehäuse mit einem gegenüber der Umgebung gasdichten Hauptgehäuseinnenraum, in dem sich zumindest ein Reformer, ein den Reformer mit thermischer Energie versorgender Reformerbrenner und ein Brennstoffzellenstapel befinden, wobei das Hauptgehäuse mindestens einen Luftanschluss aufweist, und wobei mindestens ein Gebläse vorgesehen ist, welches im Betrieb Luft durch den Luftanschluss in den Hauptgehäuseinnenraum saugt.

Derartige Brennstoffzellenanordnungen dienen z.B. als Brennstoffzellenheizgeräte. Aus Sicherheitsgründen müssen externe Leckagen von Bauteilen der Anordnung beherrscht werden. Insbesondere kann ein möglicherweise austretendes Leckagegas, wie Wasserstoff, mit der in dem Hauptgehäuse enthaltenen Luft ein zündfähiges Gemisch bilden, was unbedingt zu vermeiden ist. Dazu ist es aus dem Stand der Technik bekannt, Wasserstoffsensoren in dem Gehäuse vorzusehen, um rechtzeitig eine kritische Wasserstoffleckage zu erkennen. Dies ist jedoch aufwendig. Auch ist es bekannt, in dem Gehäuse mittels eines Gebläses einen Unterdruck zu erzeugen, so dass aus einzelnen Komponenten austretende Leckagegase abgesaugt werden. Bei den üblicherweise quaderförmigen Gehäusen entstehen dabei jedoch Toträume, in denen sich zündfähige Gase ansammeln können. In EP 1 397 843 B9 wird daher vorgeschlagen, das Gehäuse der Brennstoffzellenanordnung in seiner Form an die Position der Komponenten der Anordnung anzupassen, so dass dieses die Komponenten mit geringem Abstand umschließt. Auf diese Weise sollen Toträume vermieden werden. Dabei wird die durch das Gehäuse strömende Luft dem Brennstoffzellenstapel als Betriebsgas zugeführt. Darüber hinaus ist vorgesehen, dass die Luft in dem Gehäuse von kalten zu warmen Komponenten der Brennstoffzellenanordnung strömt. Diese Lösung bietet zwar eine verbesserte Leckagebeherrschung.

Allerdings besteht eine erhebliche Einschränkung hinsichtlich der baulichen Ausgestaltung des Gehäuses und der Anordnung der Komponenten in dem Gehäuse.

Ausgehend von dem erläuterten Stand der Technik liegt der Erfindung die Aufgabe zugrunde, eine Brennstoffzellenanordnung der eingangs genannten Art bereitzustellen, die in einfacher Weise eine sichere Leckagebeherrschung bei großer Flexibilität hinsichtlich Ausgestaltung des Gehäuses und Anordnung der Komponenten in dem Gehäuse ermöglicht.

Diese Aufgabe wird erfindungsgemäß durch den Gegenstand von Anspruch 1 gelöst. Vorteilhafte Ausgestaltungen finden sich in den abhängigen Ansprüchen, der Beschreibung und den Figuren.

Für eine Brennstoffzellenanordnung der eingangs genannten Art löst die Erfindung die Aufgabe dadurch, dass der Brennstoffzellenstapel in einem innerhalb des Hauptgehäuseinnenraums angeordneten Brennstoffzellengehäuse angeordnet ist, welches an die Form des Brennstoffzellenstapels angepasst ist, so dass es den Brennstoffzellenstapel mit geringem Abstand umschließt, wobei das Brennstoffzellengehäuse mindestens eine mit dem Hauptgehäuseinnenraum verbundene Ansaugöffnung und mindestens einen Anschluss zu einer mit der Ansaugseite des Gebläses verbundenen Absaugleitung aufweist, und wobei mit der Druckseite des Gebläses eine mit einer Einlassöffnung des Reformerbrenners verbundene Brennerleitung verbunden ist.

Bei der Brennstoffzellenanordnung kann es sich in an sich bekannter Weise um ein Brennstoffzellenheizgerät handeln. Das Hauptgehäuse der Anordnung ist bis auf den oder die Luftanschlüsse gegenüber der Umgebung dicht. Über den oder die Luftanschlüsse kann Umgebungsluft in das Hauptgehäuse gesaugt werden. Entsprechend können der oder die Anschlüsse in besonders einfacher Weise lediglich eine Öffnung zur Umgebung des Hauptgehäuses sein. Der Reformer dient in an sich bekannter Weise zur Erzeugung eines wasserstoffreichen Gases aus Kohlenwasserstoffen. Zum Beispiel kann der Reformer in einem Reformierungsprozess Wasserstoff aus Erdgas gewinnen. Der Reformierungsprozess benötigt verhältnismäßig hohe Temperaturen. Diese werden von dem Reformerbrenner zur Verfügung gestellt. Er führt einen Verbrennungsprozess durch und die entstehende Wärme wird dem Reformer zugeführt. In dem Verbrennungsprozess wird eine Mischung aus Luft und einem Brenngas verbrannt. Die von dem Brenner verbrannte Luft ist dabei die von dem Gebläse angesaugte Luft. Das von dem Reformer bereitgestellte wasserstoffreiche Gas wird als ein erstes Prozessgas dem Brennstoffzellenstapel zugeführt. Außerdem wird dem Brennstoffzellenstapel als zweites Prozessgas Luft zugeführt. Die als Prozessgas dem Brennstoffzellenstapel zugeführte Luft ist insbesondere nicht die über das Gebläse und den Luftanschluss des Hauptgehäuses angesaugte Luft. Vielmehr wird dem Brennstoffzellenstapel vorteilhaft Luft aus einer anderen Quelle zugeführt. Das Gebläse kann ebenfalls in dem Hauptgehäuse angeordnet sein.

Erfindungsgemäß ist der Brennstoffzellenstapel in einem separaten Brennstoffzellengehäuse in dem Hauptgehäuse angeordnet. Es ist möglich, dass in dem Brennstoffzellengehäuse nur der Brennstoffzellenstapel angeordnet ist. Dieses separate Gehäuse umschließt den Brennstoffzellenstapel eng. Lediglich ein schmaler Spalt verbleibt zwischen der Gehäusewand und dem Brennstoffzellenstapel. Der Spalt kann im Wesentlichen zwischen der gesamten Außenfläche des Brennstoffzellenstapels und dem Brennstoffzellengehäuse bestehen oder nur zwischen einer oder mehreren leckagekritischen Außenflächen des Brennstoffzellenstapels und dem Brennstoffzellengehäuse. Weiterhin ist erfindungsgemäß eine einerseits mit der Ansaugseite des Gebläses und andererseits mit einem Anschluss des Brennstoffzellengehäuses verbundene Absaugleitung vorgesehen. Das Brennstoffzellengehäuse besitzt mindestens eine Ansaugöffnung zum Hauptgehäuse. Für eine besonders gleichmäßige Luftansaugung können auch mehrere Ansaugöffnungen vorgesehen sein. Über die mindestens eine Ansaugöffnung wird Luft aus dem Hauptgehäuse durch das Brennstoffzellengehäuse abgesaugt und über die Absaugleitung dem Reformerbrenner zugeführt. Dazu erzeugt das Gebläse in der Absaugleitung einen Unterdruck, der entsprechend auch in dem Brennstoffzellengehäuse und dem Hauptgehäuse entsteht. Der Brennstoffzellenstapel wird also von einem Luftvolumenstrom umströmt. Der Reformerbrenner kann die gegebenenfalls variierende Leckagemenge hygienisch verbrennen. Das Gebläse kann insbesondere die einzige einen Unterdruck erzeugende Einrichtung der Anordnung sein und Luft nur durch die Absaugleitung ansaugen. Der gesamte dem Reformerbrenner zugeführte Luftvolumenstrom kann aus dem Hauptgehäuse stammen, in das er über den oder die Luftanschlüsse des Hauptgehäuses eingetreten ist. Er wird zwischen der bzw. den Außenflächen des Brennstoffzellenstapels und der bzw. den entsprechenden Innenseiten des Brennstoffzellengehäuses geführt. Ein enges Umschließen des Brennstoffzellenstapeln durch das Brerlnstoffzellengehäuse bzw. ein geringer Abstand zwischen dem Brennstoffzellenstapel und den Wänden des Brennstoffzellengehäuses bedeuten in diesem Zusammenhang, dass beim Absaugen von Luft durch das Brennstoffzellengehäuse im Wesentlichen keine Toträume zwischen dem Stapel und den Gehäusewänden bestehen. Vielmehr wird sämtliches aus dem Brennstoffzellenstapel bei einer möglichen externen Leckage in das Brennstoffzellengehäuse austretende Gas, auch aus dem Bereich der Gasanschlüsse, abgesaugt und über die Absaugleitung dem Reformerbrenner zugeführt. Eine externe Leckage des Brennstoffzellenstapels ist damit sicher beherrschbar. Zwischen den Brennstoffzellengehäusewänden und dem Brennstoffzellenstapel kann beispielsweise ein Abstand von maximal 10 cm, vorzugsweise maximal 5 cm, bestehen.

Die übrigen Komponenten der Brennstoffzellenanordnung, insbesondere der Reformer, Reformerbrenner und gegebenenfalls weitere Komponenten, befinden sich in dem Hauptgehäuse und müssen keine separaten Gehäuse aufweisen. Diese weiteren Komponenten können dadurch weitgehend frei in dem Hauptgehäuse verteilt werden, wobei auch erheblich größere Abstände zwischen den Gehäusewänden und diesen Komponenten vorliegen können als zwischen dem Brennstoffzellenstapel und dem Brennstoffzellengehäuse. Entsprechend können bei der Absaugung von Luft durch das Hauptgehäuse im Bereich dieser Abstände auch Toträume entstehen. Der Erfindung liegt die Erkenntnis zugrunde, dass eine externe Leckage insbesondere bei dem Brennstoffzellenstapel sicherheitsrelevant ist. Diese wird erfindungsgemäß in sicherer Weise beherrscht, ohne dass dabei die baulichen Einschränkungen des Standes der Technik bestehen. So kann der Brennstoffzellenstapel weitgehend flexibel in dem Gehäuse angeordnet werden. Er muss nicht in dem Hauptströmungsweg der Luft durch das Hauptgehäuse angeordnet werden, wie beim Stand der Technik. Auch der oder die Luftanschlüsse des Hauptgehäuses und die übrigen Komponenten der Brennstoffzellenanordnung können weitgehend frei in dem Gehäuse verteilt werden. Das Hauptgehäuse kann eine einfache und praxistaugliche Form besitzen, beispielsweise eine Quaderform. Indem die durch das Brennstoffzellengehäuse gesaugte Luft über die gegenüber der Umgebung jeweils gasdichte Absaugleitung und Brennerleitung dem Reformerbrenner zugeführt wird, ist ein definierter Strömungsweg für die Leckagegase vorgegeben. Dadurch ist sichergestellt, dass etwaige entzündliche Leckagegase aus dem Brennstoffzellenstapel nicht über mögliche Zündquellen in dem Hauptgehäuse strömen können. Außerdem ist durch die Verbrennung der Leckagegase in dem Reformerbrenner ein Austreten in die Umgebung ausgeschlossen.

Nach einer Ausgestaltung kann vorgesehen sein, dass mindestens eine weitere Komponente der Brennstoffzellenanordnung in einem innerhalb des Hauptgehäuseinnenraums angeordneten separaten Gehäuse angeordnet ist, welches an die Form der Komponente angepasst ist, so dass es die Komponente mit geringem Abstand umschließt, wobei das separate Gehäuse ebenfalls einen Anschluss an die Absaugleitung aufweist, jedoch im Übrigen gasdicht gegenüber dem Hauptgehäuseinnenraum abgeschlossen ist. Das separate Gehäuse besitzt also bis auf den Anschluss an die über das Brennstoffzellengehäuse mit dem Hauptgehäuseinnenraum verbundene Absaugleitung keinen Anschluss an den Hauptgehäuseinnenraum. Das separate Gehäuse wird von der durch das Gebläse angesaugten Luft also nicht durchströmt. Durch das Gebläse wird in der Absaugleitung ein Unterdruck erzeugt, der mögliche Leckagegase auch in dem separaten Gehäuse ohne Anschluss an den Hauptgehäuseinnenraum in die Absaugleitung und zu dem Reformerbrenner mitreißt. Das separate Gehäuse kann im Übrigen wie das Brennstoffzellengehäuse ausgebildet sein.

Die Brennstoffzellenanordnung kann weiterhin eine Sensoreinrichtung aufweisen, die wiederholt eine die Verbrennungsqualität des Reformerbrenners charakterisierende Messgröße aufnimmt, und eine Regeleinrichtung, die kontinuierlich die Messgröße mit einem Sollwert vergleicht und bei einer Abweichung das Gebläse so ansteuert, dass die Messgröße wieder den Sollwert annimmt. Die Verbrennungsqualität kann in an sich bekannter Weise mit einer Sonde überwacht werden, die beispielsweise die Leitfähigkeit der Brennflamme als charakteristische Größe für die Verbrennungsqualität misst. Auch denkbar ist beispielsweise ein Sauerstoffsensor, der als für die Verbrennungsqualität charakterisierende Größe den Sauerstoffanteil des dem Reformerbrenner zugeführten Luft/Gasgemisches quantifiziert. Weichen die Messwerte der Sensoreinrichtung in unzulässiger Weise, beispielsweise um mehr als einen vorgegebenen Grenzwert, von einem Sollwert ab, steuert die Regeleinrichtung die Gebläseleistung an, um das Brenngasluftgemisch zu verändern, bis die Messwerte der Sonde wieder dem Sollwert entsprechen. Sowohl Zeitpunkt als auch Größe einer Gasleckage des Brennstoffzellenstapels sind grundsätzlich nicht vorhersehbar. Entsprechend ist auch die Zusammensetzung der dem Reformerbrenner zugeführten Verbrennungsluft nicht vorhersehbar. Mit dieser Ausgestaltung eines vormischfähigen Brenners ist auch bei stark schwankenden Gasqualitäten jederzeit eine ordnungsgemäße Verbrennung in dem Reformerbrenner möglich. Die Leckagemenge kann erfindungsgemäß daher weitgehend beliebig hoch sein. Gegebenenfalls kann die Regeleinrichtung die Zufuhr eines separaten Brenngases zu dem Reformerbrenner abschalten und das Brennstoffzellenheizgerät in einen sicheren Zustand überführen. Beispielsweise kann eine übergeordnete Sicherheitssteuerung den Regelkreis überwachen und gegebenenfalls das Gas-Hauptventil des Brennstoffzellenheizgeräts abschalten.

Nach einer weiteren Ausgestaltung kann in einer mit dem Reformer verbundenen Reformatleitung zum Leiten von durch den Reformer bereitgestelltem Reformatgas mindestens ein Kondensatabscheider angeordnet sein, der über eine Kondensatleitung mit einer mit der Absaugleitung verbundenen Abführleitung zum Abfahren von aus dem durch die Reformatleitung strömenden Reformatgasstrom abgeschiedenen flüssigen Kondensat in einen Flüssigkeitssammelbehälter verbunden ist. Die Reformatleitung führt von dem Reformer bereitgestelltes Reformatgas dem Brennstoffzellenstapel zu.

An den durch die Absaugleitung definierten Strömungsweg können für eine (interne) Leckage kritische Komponenten angeschlossen werden. Durch den Unterdruck in der Absaugleitung werden interne Leckagen zu dem Reformerbrenner mitgerissen. Zu solchen kritischen Komponenten gehören auch Kondensatabscheider, die in an sich bekannter Weise flüssiges Kondensat aus der Reformatleitung abscheiden. Bei einer Leckage können sich in dem von dem Kondensatabscheider kommenden Kondensat-Strom jedoch auch Leckagegase befinden. Diese könnten dann ebenfalls in den Flüssigkeitssammelbehälter gelangen. Der Flüssigkeitssammelbehälter ist üblicherweise zu dem Hauptgehäuseinnenraum offen. Es muss daher sichergestellt werden, dass etwaige Leckagegase nicht über den Kondensatabscheider in den Flüssigkeitssammelbehälter und aus diesem in den Hauptgehäuseinnenraum gelangen können, wo sie möglicherweise zündfähige Gemische bilden können. Dies verhindert diese Ausgestaltung der Erfindung. Befinden sich in dem durch die Kondensatleitung in die Abführleitung gelangenden Kondensat-Strom aus dem Kondensatabscheider Leckagegase, werden diese in die Absaugleitung mitgerissen, so dass das Bilden eines zündfähigen Gemisches sicher verhindert wird.

Die Abführleitung kann einen größeren Querschnitt als die Absaugleitung und/oder die Kondensatleitung besitzen. Der vergrößerte Durchmesser stellt eine Abscheidezone dar, in der sich aufgrund verringerter Raumgeschwindigkeiten flüssiges Kondensat von einem Leckagegas trennen kann. Die Abführleitung kann darüber hinaus in Richtung zu dem Flüssigkeitssammelbehälter eine Neigung von bis zu 90° besitzen, so dass Kondensat schwerkraftbedingt in diesen abfließt, während etwaige Leckagegase zur Absaugleitung mitgerissen werden. Dadurch wird sichergestellt, dass Kondensat nicht in die Absaugleitung mitgerissen wird, sondern in den Flüssigkeitssammelbehälter abfließt. Der Querschnitt der Abführleitung kann insbesondere mehr als doppelt so groß sein wie der Querschnitt der Kondensatleitung. Um eine Durchströmung der Abführleitung zu verhindern, kann zwischen der Abführleitung und dem Flüssigkeitssammelbehälter ein Siphon angeordnet sein, der den Flüssigkeitssammelbehälter gasdicht von der Absaugleitung trennt. Die Sperrhöhe des Siphons kann ausreichend groß sein, um auch bei maximaler Leistung des Gebläses ein Saugen von Flüssigkeit in die Absaugleitung zu verhindern und/oder bei maximaler Leckage der Kondensatabscheider durch einen entstehenden Überdruck nicht entleert zu werden.

Ein maximaler Über- und Unterdruck führt also nicht zu einer Entleerung des Siphons oder zu Wassereintrag in das Gebläse. Wasser aus dem Flüssigkeitssammelbehälter kann im Brennstoffzellenheizgerätprozess nach Aufbereitung wieder verwendet werden. Außerdem kann vorgesehen sein, dass der Flüssigkeitssammelbehälter einen Überlauf besitzt, um Flüssigkeit aus diesem abzulassen.

Ein Ausführungsbeispiel der Erfindung wird nachfolgend anhand von Figuren näher erläutert. Es zeigen schematisch:
- Fig. 1: eine erfindungsgemäße Brennstoffzellenanordnung in einem Vertikalschnitt, und
- Fig. 2: eine ausschnittsweise vergrößerte schematische Darstellung des bei der Anordnung in Fig. 1 vorgesehenen Kondensatabscheiders.

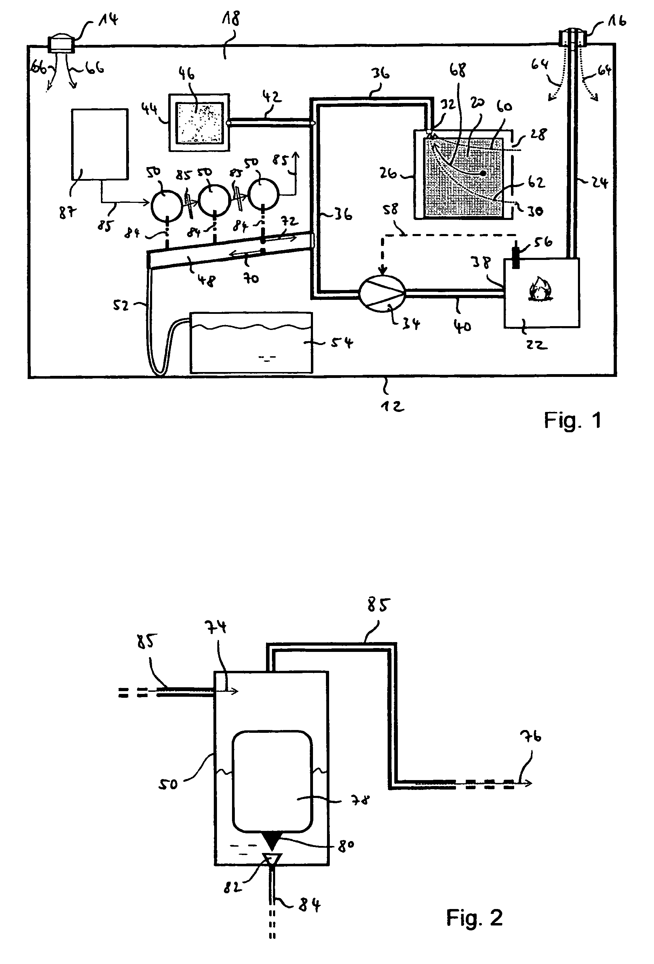

Soweit nichts anderes angegeben rist, bezeichnen in den Figuren gleiche Bezugszeichen gleiche Gegenstände. Die in Fig. 1 dargestellte erfindungsgemäße Brennstoffzellenanordnung umfasst ein quaderförmiges Hauptgehäuse 12 mit einem gegenüber der Umgebung des Hauptgehäuses 12 bis auf zwei Luftanschlüsse 14, 16 gasdichten Hauptgehäuseinnenraum 18. Die Luftanschlüsse 14, 16 sind in dem dargestellten Beispiel an der Oberseite des Hauptgehäuses 12 vorgesehen. Die Luftanschlüsse können alternativ oder kumulativ vorgesehen sein. Dies ist an sich bekannt. In dem Hauptgehäuse 12 befinden sich mehrere Komponenten der Brennstoffzellenanordnung, von denen in Fig. 1 aus Gründen der Übersichtlichkeit nur einige dargestellt sind. Dazu gehört ein Brennstoffzellenstapel 20 und ein einen, ebenfalls in dem Hauptgehäuse 12 angeordneten Reformer 87 mit thermischer Energie versorgender Reformerbrenner 22. Der Reformerbrenner 22 weist eine aus dem Hauptgehäuse 12 führende Abgasleitung 24 auf. Zu erkennen ist in Fig. 1, dass der Luftanschluss 16 als Rohr-in-Rohr-System ausgebildet ist, wobei das innere Rohr durch die Abgasleitung 24 gebildet wird und das äußere Rohr einen Lufteinlass bildet. Der Brennstoffzellenstapel 20 wird dabei von einem in dem Hauptgehäuse 12 angeordneten separaten Brennstoffzellengehäuse 26 an sämtlichen Seiten bis auf die Unterseite mit geringem Abstand umschlossen. An der Unterseite wird der Brennstoffzellenstapel 20 ebenfalls von dem Brennstoffzellengehäuse 26 umschlossen, allerdings ohne Abstand. Das Brennstoffzellengehäuse 26 besitzt in dem dargestellten Beispiel zwei mit dem Hauptgehäuseinnenraum 18 verbundene Ansaugöffnungen 28, 30. Selbstverständlich können auch mehr als zwei Ansaugöffnungen oder natürlich auch nur eine Ansaugöffnung vorgesehen sein. Darüber hinaus besitzt das Brennstoffzellengehäuse 26 einen Anschluss 32 zu einer mit der Ansaugseite eines Gebläses 34 verbundenen Absaugleitung 36. Mit der Druckseite des Gebläses 34 ist eine mit einer Einlassöffnung 38 des Reformerbrenners 22 verbundene Brennerleitung 40 verbunden. Darüber hinaus ist über eine in dem gezeigten Beispiel im oberen Bereich von der Absaugleitung 36 abzweigende Leitung 42 ein weiteres separates Gehäuse 44 in dem Hauptgehäuseinnenraum 18 angeordnet. In dem Gehäuse 44 befindet sich eine beliebige weitere Komponente 46 der Brennstoffzellenanordnung, in deren Betrieb es zu Gasleckagen kommen kann. Sowohl das separate Gehäuse 44 als auch das Brennstoffzellengehäuse 26 sind jeweils an die in ihnen befindliche Komponente 46 bzw. den Brennstoffzellenstapel 20 in ihrer Form so angepasst, dass sie die Komponente 46 bzw. den Brennstoffzellenstapel 20 mit geringem Abstand umschließen. Der Brennstoffzelle 20 werden über nicht näher dargestellte Leitungen zum Betrieb insbesondere das von dem Reformer bereitgestellte wasserstoffreiche Gas einerseits und Luft, beispielsweise Umgebungsluft, andererseits zugeführt.

Es ist weiterhin zu erkennen, dass zwischen dem Gebläse 34 und der abzweigenden Leitung 42 eine Abführleitung 48 an die Absaugleitung 36 angeschlossen ist. Mit der Abführleitung 48 stehen in dem gezeigten Beispiel drei sehr schematisch dargestellte Kondensatabscheider 50 über jeweils eine Kondensatleitung 84 in Verbindung. Die Kondensatabscheider 50 sind in einer Reformatleitung 85 eines ebenfalls in dem Hauptgehäuse 12 angeordneten Reformers 87 angeordnet. An ihrem der Absaugleitung 36 abgewandten Ende mündet die Abführleitung 48 in einen Siphon 52, der wiederum mit einem Flüssigkeitssammelbehälter 54 verbunden ist. Die Abführleitung 48 ist in Richtung des Siphons nach unten geneigt. Schließlich ist dem Reformerbrenner 22 eine Sensoreinrichtung 56 zugeordnet, die eine für die Verbrennungsqualität des Brenners 22 charakteristische Größe fortlaufend misst. Die Verbrennungsqualität wiederum gibt Aufschluss über das dem Brenner 22 zugeführte Luft/Brenngasgemisch. So wird dem Brenner 22 über die Absaugleitung 36 und Brennerleitung 40 in noch näher zu erläuternder Weise gegebenenfalls mit Leckagegas angereicherte Luft zugeführt. Zum anderen wird dem Brenner 22 über eine nicht dargestellte Leitung ein Brenngas zugeführt. Das Brenngas kann z.B. auch vor dem Brennerluftgebläse zugeführt werden. Das Luft/Brenngasgemisch wird in dem Reformerbrenner 22 verbrannt. Die Messwerte der Sensoreinrichtung 56 werden an eine nicht näher dargestellte Regeleinrichtung übergeben, die die Leistung des Gebläses 34 ansteuern kann, wie durch den Pfeil 58 in Fig. 1 veranschaulicht. Dies wird unten noch näher erläutert.

Die Vorrichtung arbeitet wie folgt: Im Betrieb erzeugt das Gebläse 34 in der Absaugleitung 36 und damit auch in dem Spalt zwischen dem den Brennstoffzellenstapel 20 umhausenden Brennstoffzellengehäuse 26 einen Unterdruck. Dieser Unterdruck sorgt dafür, dass Luft aus dem Hauptgehäuseinnenraum 18 durch die Ansaugöffnungen 28, 30 über den Brennstoffzellenstapel 20 hinweg und durch den Anschluss 32 in die Absaugleitung 36 strömt. Dies ist in Fig. 1 durch die Pfeile 60, 62 veranschaulicht. Der Unterdruck entsteht auch in dem Hauptgehäuseinnenraum 18, so dass durch die Luftanschlüsse 14, 16 Umgebungsluft in den Hauptgehäuseinnenraum 18 nachströmt, wie dies in Fig. 1 durch die Pfeile 64, 66 veranschaulicht ist. Der geringe Abstand zwischen den Wänden des Brennstoffzellengehäuses 26 und dem Brennstoffzellenstapel 20 bewirkt, dass dabei keine Toträume entstehen. Vielmehr werden alle gegenüber den Wänden des Brennstoffzellengehäuses 26 beabstandete Flächen des Brennstoffzellenstapels 20 von Luft überströmt. Beim Überströmen des Brennstoffzellenstapels 20 werden daher auch sämtliche gegebenenfalls aus diesem austretende Leckagegase, auch Leckagegase aus dem Bereich der Anschlüsse, in die Absaugleitung 36 mitgerissen, wie in Fig. 1 durch den Pfeil 68 veranschaulicht. Die gegebenenfalls mit den Leckagegasen angereicherte Luft strömt durch die Absaugleitung 36 zur Saugseite des Gebläses 34 und von dessen Druckseite durch die Brennerleitung 40 zu der Eingangsöffnung 38 des Reformerbrenners 22, wo sie gegebenenfalls gemeinsam mit einem Brenngas verbrannt wird. Der in der Absaugleitung 36 bestehende Unterdruck pflanzt sich auch in die von dieser abzweigende Leitung 42 fort, so dass auch zwischen der weiteren Komponente 46 und dem separaten Gehäuse 44 ein Unterdruck entsteht, der gegebenenfalls von dieser Komponente 46 austretende Leckagegase mitreißt. Wiederum verhindert der geringe Abstand zwischen den Wänden des Gehäuses 44 und der Komponente 46 das Auftreten von Toträumen. Von den Kondensatabscheidern 50 wird aus dem durch die Reformatleitung 85 strömenden Gas gegebenenfalls vorhandenes flüssiges Kondensat abgeschieden. Dieses fließt über die Kondensatleitungen 84 in die Abführleitung 48 und von dieser durch den Siphon 52 in den Flüssigkeitssammelbehälter 54, wie durch den Pfeil 70 in Fig. 1 veranschaulicht. Möglicherweise an den Kondensatabscheidern 50 auftretende Leckagegase werden dagegen durch den von der Absaugleitung 36 ausgehenden Unterdruck abgesaugt, wie durch den Pfeil 72 veranschaulicht. Der Siphon 52 besitzt eine ausreichend große Sperrhöhe, um auch bei maximaler Gebläseleistung ein Saugen von Kondensat in die Absaugleitung 36 zu verhindern. Der Aufbau der Abführleitung 48 und des Siphons sind z.B. durch eine ausreichende Höhe, derart ausgefiihrt, dass auch bei maximaler Ansteuerung des Gebläses 34 kein Wasser aus dem Siphon 52 über die Abführleitung 48 in die Absaugleitung 36 gelangen kann. Durch die Sensoreinrichtung 56 und die zugehörige Regeleinrichtung ist sichergestellt, dass der Reformerbrenner 22 jederzeit ein für die Verbrennung günstiges Luft/Brenngasgemisch erhält. Selbstverständlich können neben den in Fig. 1 gezeigten Komponenten noch weitere Komponenten in dem Hauptgehäuse 12 angeordnet sein.

In Fig. 2 sind beispielhaft für einen der Kondensatabscheider 50 aus Fig. 1 in einer schematischen Vergrößerung weitere Details dargestellt. Dem im Brenngaspfad angeordneten Kondensatabscheider 50 wird jeweils flüssiges Kondensat, wie Wasser, enthaltendes Brenngas zugeführt, wie durch den Pfeil 74 veranschaulicht. In dem Abscheider 50 wird das Gas von der Flüssigkeit separiert. Über die Reformatleitung 85 strömt das von der Flüssigkeit getrennte Brenngas aus dem Kondensatabscheider 50 wiederaus, wie durch den Pfeil 76 veranschaulicht. Der Kondensatabscheider 50 weist einen Schwimmkörper 78 auf, der sich abhängig von dem Flüssigkeitsstand hebt oder senkt. An seiner Unterseite besitzt der Schwimmkörper 78 einen Dichtkörper 80, der bei Einsetzen in eine korrespondiere Dichtaufnahme 82 am Fuß des Kondensatabscheiders 50 eine Verbindung zu der Kondensatleitung 84 entweder freigibt oder verschließt. In dem in Fig. 2 gezeigten Beispiel hat der Flüssigkeitsstand in dem Kondensatabscheider 50 eine Höhe erreicht, bei der sich der Schwimmkörper 78 und mit ihm der Dichtkörper 80 aus der Dichtaufnahme 82 entfernt haben, so dass Flüssigkeit durch die Kondensatleitung 84 bis zu einer vorgegebenen Höhe abfließen kann, bei der sich der Dichtkörper 80 des Schwimmkörpers 78 wieder in die Dichtaufnahme 82 absenkt. Auf diese Weise kann der Flüssigkeitsstand in dem Kondensatabscheider 50 innerhalb eines Bandes konstant gehalten werden. Über die in Fig. 2 aus Gründen der Übersichtlichkeit nicht dargestellte Abführleitung 48 und den Siphon 52 gelangt der abgeschiedene Flüssigteil in den Sammelbehälter 54.

## Patentansprüche

1. Brennstoffzellenanordnung, umfassend ein Hauptgehäuse (12) mit einem gegenüber der Umgebung gasdichten Hauptgehäuseinnenraum (18), in dem sich zumindest ein Reformer, ein den Reformer mit thermischer Energie versorgender Reformerbrenner (22) und ein Brennstoffzellenstapel (20) befinden, wobei das Hauptgehäuse (12) mindestens einen Luftanschluss (14, 16) aufweist, und wobei mindestens ein Gebläse (34) vorgesehen ist, welches im Betrieb Luft durch den Luftanschluss (14, 16) in den Hauptgehäuseinnenraum (18) saugt,
**dadurch gekennzeichnet, dass** der Brennstoffzellenstapel (20) in einem innerhalb des Hauptgehäuseinnenraums (18) angeordneten Brennstoffzellengehäuse (26) angeordnet ist, welches an die Form des Brennstoffzellenstapels (20) angepasst ist, so dass es den Brennstoffzellenstapel (20) mit geringem Abstand umschließt, wobei das Brennstoffzellengehäuse (26) mindestens eine mit dem Hauptgehäuseinnsnraum (18) verbundene Ansaugöffnung (28, 30) und mindestens einen Anschluss (32) zu einer mit der Ansaugseite des Gebläses (34) verbundenen Absaugleitung (36) aufweist, und wobei mit der Druckseite des Gebläses (34) eine mit einer Einlassöffnung (38) des Reformerbrenners (22) verbundene Brennerleitung (40) verbunden ist.

2. Brennstoffzellenanordnung nach Anspruch 1, **dadurch gekennzeichnet, dass** mindestens eine weitere Komponente (46) der Brennstoffzellenanordnung in einem innerhalb des Hauptgehäuseinnenraums (18) angeordneten separaten Gehäuse (44) angeordnet ist, welches an die Form der Komponente (46) angepasst ist, so dass es die Komponente (46) mit geringem Abstand umschließt, wobei das separate Gehäuse (44) ebenfalls einen Anschluss an die Absaugleitung (36) aufweist, jedoch im Übrigen gasdicht gegenüber dem Hauptgehäuseinnenraum (18) abgeschlossen ist.

3. Brennstoffzellenanordnung nach einem der Ansprüche 1 oder 2, weiterhin **gekennzeichnet durch** eine Sensoreinrichtung (56), die wiederholt eine die Verbrennungsqualität des Reformerbrenners (22) charakterisierende Messgröße aufnimmt, und eine Regeleinrichtung (58), die kontinuierlich die Messgröße mit einem Sollwert vergleicht und bei einer Abweichung das Gebläse (34) so ansteuert, dass die Messgröße wieder den Sollwert annimmt.

4. Brennstoffzellenanordnung nach einem der vorhergehenden Ansprüche, **dadurch gekennzeichnet, dass** in einer mit dem Reformer verbundenen Reformatleitung zum Leiten von durch den Reformer bereitgestelltem Reformatgas mindestens ein Kondensatabscheider (50) angeordnet ist, der über eine Kondensatleitung (84) mit einer mit der Absaugleitung (36) verbundenen Abführleitung (48) zum Abführen von aus dem durch die Reformatleitung strömenden Reformatgasstrom abgeschiedenen flüssigen Kondensat in einen Flüssigkeitssammelbehälter (54) verbunden ist.

5. Brennstoffzellenanordnung nach Anspruch 4, **dadurch gekennzeichnet, dass** die Abführleitung (48) einen größeren Querschnitt als die Absaugleitung (36) und/oder die Kondensatleitung (84) besitzt.

6. Brennstoffzellenanordnung nach einem der Ansprüche 4 oder 5, **dadurch gekennzeichnet, dass** die Abführleitung (48) mit einem Siphon (52) verbunden ist, dessen Sperrhöhe ausreichend groß ist, um auch bei maximaler Leistung des Gebläses (34) ein Saugen von Flüssigkeit in die Absaugleitung (36) zu verhindern und/oder bei maximaler Leckage der Kondensatabscheider durch einen entstehenden Überdruck nicht entleert zu werden.

7. Brennstoffzellenanordnung nach einem der Ansprüche 4 bis 6, **dadurch gekennzeichnet, dass** der Flüssigkeitssammelbehälter (54) einen Überlauf besitzt, um Flüssigkeit aus diesem abzulassen.

## Claims

1. A fuel cell arrangement comprising a main housing (12) having a main housing interior (18) that is gas-tight with reference to the surroundings in which is located at least one reformer, a reformer burner (22) supplying the reformer with thermal energy, and a fuel cell stack (20), wherein the main housing (12) comprises at least one air connection (14, 16), and wherein at least one fan (34) is provided that draws air through the air connection (14, 16) into the main housing interior (18) during operation,
**characterized in that** the fuel cell stack (20) is arranged in a fuel cell housing (26) arranged within the main housing interior (18) which is adapted to the shape of the fuel cell stack (20) such that it encloses the fuel cell stack (20) at a close distance, wherein the fuel cell housing (26) comprises at least one intake opening (28, 30) connected to the main housing interior (18) and at least one connection (32) to the suction line (36) connected to the intake side of the fan (34), and wherein a burner line (40) connected to an inlet opening (38) of the reformer burner (22) is connected to the pressure side of the fan (34).

2. The fuel cell arrangement according to claim 1, **characterized in that** at least one other component (46) of the fuel cell arrangement can be arranged in a separate housing (44) within the main housing interior (18) which is adapted to the shape of the components (46) such that it encloses the component (46) at a close distance, wherein the separate housing (44) also has a connection to the intake line (36) but is otherwise sealed gas tight from the main housing interior (18).

3. The fuel cell arrangement according to one of claims 1 or 2, further **characterized by** a sensor device (56) that repeatedly records a measured quantity that characterizes the combustion quality of the reformer burner (22), and a control device (58) that continuously compares the measured quantity to a setpoint and, in case of a deviation, controls the fan (34) so that the measured quantity again assumes the setpoint.

4. The fuel cell arrangement according to one of the prior claims, **characterized in that** at least one condensate trap (50) is arranged in the reformate line connected to the reformer to conduct reformate gas provided by the reformer, and can be connected via a condensate line (84) to a drain line (48) connected to the suction line (36) for draining liquid condensate separated from the reformate gas flow flowing from the reformate line into a liquid reservoir (54).

5. The fuel cell arrangement according to claim 4, **characterized in that** the drain line (48) has a larger cross-section than the suction line (36) and/or the condensate line (84).

6. The fuel cell arrangement according to one of claims 4 or 5, **characterized in that** the drain line (48) is connected to a siphon (52) the trap seal height of which is sufficiently high to prevent liquid from being drawn into the suction line (36) even when the fan (34) it is at maximum output, and/or to prevent the condensate trap from being drained by the overpressure arising from maximum leakage.

7. The fuel cell arrangement according to one of claims 4 to 6, **characterized in that** the liquid reservoir (54) has an overflow so that liquid can drain from it.

## Revendications

1. Dispositif de pile à combustible, comprenant un boîtier principal (12) avec un espace intérieur de boîtier principal (18) qui est étanche aux gaz par rapport à l'environnement et dans lequel se trouvent au moins un réformateur, un brûleur de réformateur (22) alimentant le réformateur en énergie thermique et un empilement de piles à combustible (20), le boîtier principal (12) présentant au moins un raccord d'air (14, 16), et au moins un ventilateur (34) étant prévu qui, pendant le fonctionnement, aspire de l'air à travers le raccord d'air (14, 16) en direction de l'espace intérieur de boîtier principal (18),
**caractérisé en ce que** l'empilement de piles à combustible (20) est disposé dans un boîtier de pile à combustible (26) disposé à l'intérieur de l'espace intérieur de boîtier principal (18), boîtier de pile à combustible qui est adapté à la forme de l'empilement de piles à combustible (20) de telle sorte qu'il entoure à faible distance l'empilement de piles à combustible (20), le boîtier de pile à combustible (26) présentant au moins un orifice d'aspiration (28, 30) raccordé à l'espace intérieur de boîtier principal (18) et au moins un raccord (32) avec une conduite d'aspiration (36) raccordée au côté aspiration du ventilateur (34), et une conduite de brûleur (40) raccordée à un orifice d'admission (38) du brûleur de réformateur (22) étant raccordée au côté pression du ventilateur (34).

2. Dispositif de pile à combustible selon la revendication 1, **caractérisé en ce qu'**au moins un autre composant (46) du dispositif de pile à combustible est disposé dans un boîtier (44) séparé qui est disposé à l'intérieur de l'espace intérieur de boîtier principal (18) et qui est adapté à la forme du composant (46) de telle sorte qu'il entoure à faible distance le composant (46), le boîtier (44) séparé présentant également un raccord à la conduite d'aspiration (36) mais en étant pour le reste fermé de façon étanche aux gaz par rapport à l'espace intérieur de boîtier principal (18).

3. Dispositif de pile à combustible selon une des revendications 1 ou 2, caractérisé en plus par un dispositif de capteur (56) qui enregistre de façon répétée une grandeur de mesure caractérisant la qualité de combustion du brûleur de réformateur (22), et par un dispositif de régulation (58) qui compare de façon continue la grandeur de mesure avec une valeur de consigne et, en cas de divergence, pilote le ventilateur (34) de telle sorte que la grandeur de mesure adopte de nouveau la valeur de consigne.

4. Dispositif de pile à combustible selon une des revendications précédentes, **caractérisé en ce que**, dans une conduite de reformat raccordée au réformateur et destinée à conduire du gaz de reformat fourni par le réformateur, il est disposé au moins un séparateur de condensat (50) qui, par le biais d'une conduite de condensat (84), est raccordé à une conduite d'évacuation (48) raccordée à la conduite d'aspiration (36) pour l'évacuation, vers un collecteur de liquide (54), du condensat liquide séparé à partir du flux de gaz de reformat s'écoulant à travers la conduite de reformat.

5. Dispositif de pile à combustible selon la revendication 4, **caractérisé en ce que** la conduite d'évacuation (48) possède une section transversale plus grande que la conduite d'aspiration (36) et/ou la conduite de condensat (84).

6. Dispositif de pile à combustible selon une des revendications 4 ou 5, **caractérisé en ce que** la conduite d'évacuation (48) est raccordée à un siphon (52) dont la hauteur de blocage est suffisamment grande pour empêcher, même en cas de puissance maximale du ventilateur (34), une aspiration de liquide dans la conduite d'aspiration (36), et/ou pour ne pas être vidée en cas de fuite maximale des séparateurs de condensat due à la survenue d'une surpression.

7. Dispositif de pile à combustible selon une des revendications 4 à 6, **caractérisé en ce que** le collecteur de liquide (54) possède un trop-plein destiné à permettre l'évacuation de liquide hors de ce collecteur.
